# EUROPÄISCHE PATENTSCHRIFT

(11) **EP 3 090 292 B1**
(45) Veröffentlichungstag und Bekanntmachung des Hinweises auf die Patenterteilung: **12.12.2018**
(21) Anmeldenummer: 14823943.7
(22) Anmeldetag: 16.12.2014
(51) Int. Cl.: F21S 8/04, F21K 9/61, F21Y 115/10

(54) **LEUCHTENANORDNUNG SOWIE LEUCHTE**
LIGHTING DEVICE
DISPOSITIF D'ÉCLAIRAGE

(30) Priorität: 17.12.2013 DE 202013105727 U
(43) Veröffentlichungstag der Anmeldung: 09.11.2016
(73) Patentinhaber: Zumtobel Lighting GmbH, 6850 Dornbirn (AT)
(72) Erfinder: MACHATE, Andreas, 88239 Wangen im Allgäu (DE); MARTIN, Kenneth, A-6923 Lauterach (AT)
(74) Vertreter: Kiwit, Benedikt
(86) Internationale Anmeldenummer: PCT/EP2014/077960
(87) Internationale Veröffentlichungsnummer: WO 2015/091480

(56) Entgegenhaltungen:
- EP-A1- 2 529 259
- WO-A2-2006/089450
- US-A1- 2008 037 284
- US-A1- 2011 134 361
- US-A1- 2011 205 757
- US-A1- 2013 279 195

## Beschreibung

Die vorliegende Erfindung betrifft eine Leuchtenanordnung mit einem flächigen Lichtleiter, in welchen Licht von einer oder mehreren Lichtquellen in seitlicher Richtung, also im Wesentlichen in einer Erstreckungsebene des Lichtleiters, in den Lichtleiter eingekoppelt werden kann. Die vorliegende Erfindung betrifft insbesondere eine Leuchtenanordnung mit einzelnen Merkmalen des Schutzanspruchs 1.

Im Stand der Technik kann bei zumindest annähernd horizontal angeordneten Pendelleuchten seitlich in einen zumindest annähernd horizontal ausgerichteten Lichtleiter eingekoppeltes Licht in vertikaler Richtung ausgekoppelt werden, insbesondere an einer Vorderseite des Lichtleiters. Dabei kann eine flächige Abstrahlung über die Vorderseite z.B. mittels das Licht streuenden Elementen erzielt werden. Das seitlich eingekoppelte Licht kann insbesondere in einer axialen (also vertikalen) Richtung ausgekoppelt werden, die zumindest annähernd orthogonal zur seitlichen Richtung ist. Bei dieser Art von Lichtleitern kann eine Lichtquelle seitlich angeordnet werden, und es kann eine großflächige (Haupt-)Beleuchtung, z.B. eines Raumes, über die Vorderseite des Lichtleiters erzielt werden. Insbesondere bei Pendelleuchten, Anbauleuchten oder Einbauleuchten ist es jedoch wünschenswert, nicht nur eine Hauptbeleuchtung zu ermöglichen, sondern auch weitere Lichteffekte oder Nebenbeleuchtungen hervorzurufen, z.B. um eine Seitenwand des Raumes besser beleuchten zu können, oder um Indirektlicht erzeugen zu können. Gemäß dem Stand der Technik werden hierzu üblicherweise zusätzliche Leuchtmittel vorgesehen, welche diese Aufgabe erfüllen und seitlich bzgl. der Leuchte abstrahlen.

Das Dokument EP 2 529 259 offenbart eine Leuchtanordnung gemäß dem Obergriff des Anspruch 1.

Es ist eine Aufgabe der vorliegenden Erfindung, eine möglichst flach bauende Leuchtenanordnung für ein breites Einsatzgebiet bereitzustellen, insbesondere eine Leuchtenanordnung zum Abstrahlen von Indirektlicht oder Licht mit mindestens zwei unterschiedlichen Funktionen, bevorzugt Indirektlicht und Licht für eine direkte Bestrahlung. Dabei besteht auch Interesse an einem einfachen, insbesondere kostengünstigen Aufbau der Leuchtenanordnung bzw. einer Leuchte mit der Leuchtenanordnung.

Diese Aufgabe wird durch eine Leuchtenanordnung bzw. eine Leuchte gemäß den unabhängigen Ansprüchen gelöst. Die abhängigen Ansprüche bilden den zentralen Gedanken in besonders vorteilhafter Wiese weiter.

Gemäß einem ersten Aspekt betrifft die Erfindung eine Leuchtenanordnung mit einem flächigen Lichtleiter und mindestens einer Lichtquelle, wobei der Lichtleiter eine Vorderseite und eine Rückseite und eine die Vorder- und Rückseite verbindende Seitenkontur aufweist, und wobei die Lichtquelle in optischer Verbindung mit einem Einkoppelbereich des Lichtleiters zum Einkoppeln von Licht der Lichtquelle in den Lichtleiter angeordnet ist. Der Einkoppelbereich ist durch einen Teilbereich der Seitenkontur gebildet und der Lichtleiter weist Auskoppelbereiche auf, welche durch mindestens zwei im Wesentlichen gegenüberliegende Teilbereiche der Seitenkontur gebildet sind, um das Licht der mindestens einen Lichtquelle über die Auskoppelbereiche seitlich auszukoppeln.

Hierdurch kann mittels nur einer oder mehrerer Lichtquellen sowohl ein seitliches Einkoppeln als auch ein seitliches Auskoppeln an mehreren gegenüberliegenden Seiten des Lichteiters erfolgen. Das Licht kann in mehrere Raumrichtungen abgestrahlt werden, insbesondere mit einer einzigen Lichtquelle oder einer geringen Anzahl von Lichtquellen. Es kann z.B. ein Lichtband erzeugt werden. Dabei kann z.B. ein zumindest annähernd horizontal ausgerichteter Lichtleiter dazu verwendet werden, seitlich eingekoppeltes Licht seitlich auszukoppeln, insbesondere um möglichst diffuses Indirektlicht bereitzustellen und eine Indirektbeleuchtung zu ermöglichen. Der Lichtleiter kann dabei wahlweise für eine Indirektbeleuchtung in Kombination mit einer Hauptbeleuchtung verwendet werden.

Die erfindungsgemäße Leuchtenanordnung ermöglicht es auf einfache Weise, Licht in seitlicher Richtung abzustrahlen, sei es allein in seitlicher Richtung oder sei es zusätzlich auch in einer weiteren Richtung, insbesondere einer Hauptabstrahlungsrichtung, in welcher eine direkte Beleuchtung erfolgen soll, insbesondere über die Vorderseite, welche bei Pendelleuchten nach unten zum Boden weist. Bevorzugt ist das seitlich abgestrahlte Licht Indirektlicht. Bevorzugt ist der Einkoppelbereich durch eine oder mehrere Seitenflächen der Seitenkontur gebildet. Bei im Wesentlichen gegenüberliegend angeordneten Auskoppelbereichen kann das Licht an mehreren Abschnitten der Seitenkontur ausgekoppelt werden, ohne dass hierzu notwendigerweise eine Vielzahl von Lichtquellen erforderlich ist. Dies ist z.B. in Verbindung mit umlaufend zu allen Seiten des Lichtleiters abgestrahltem Indirektlicht von Vorteil. Eine bevorzugte Geometrie des Lichtleiters ist dabei eine längliche Rechteckform, mit an gegenüberliegenden Seiten angeordneten Auskoppelbereichen. Je nachdem, ob der Lichtleiter eine umlaufende Seitenkontur aufweist oder gegenüberliegende, jedoch voneinander getrennt angeordnete Seitenkonturabschnitte, kann ein flächig zusammenhängender Einkoppelbereich bzw. entsprechend zusammenhängende Auskoppelbereiche vorgesehen sein. Auch können mehrere gegenüberliegende Einkoppelbereiche vorgesehen sein.

Die Lichtquelle ist an einer dafür vorgesehenen Aufnahme bzw. einem dafür vorgesehenen Träger der Leuchte angeordnet und elektrisch kontaktiert. Die Lichtquelle kann eine LED sein, und die Aufnahme bzw. der Träger kann eine Platine sein.

Als flächiger Lichtleiter ist dabei bevorzugt ein Lichtleiter mit einer ebenen Geometrie zu verstehen, bei welchem die Vorder- und Rückseite den größten Flächenanteil der Oberfläche einnehmen. Ein flächiger Lichtleiter ist z.B. ein flaches Teil wie z.B. eine Platte, welches sich hauptsächlich in einer bestimmten Ebene (Erstreckungsebene) erstreckt. Der flächige Lichtleiter kann rund oder eckig ausgeführt sein, und die Seitenkontur kann umlaufend sein. Der Lichtleiter kann eine Seitenkontur ohne Kanten oder Absätze aufweisen, also eine stetig umlaufende Seitenkontur. Der flächige Lichtleiter kann in der Erstreckungsebene z.B. eine Rechteckgeometrie oder eine Kreisgeometrie aufweisen. Der Lichtleiter ist eingerichtet, Licht durch Totalreflexion an der Vorder- und Rückseite innerhalb des Lichtleiters in seitlicher Richtung weiterzuleiten.

Als Vorderseite ist dabei bevorzugt eine Seite zu verstehen, welche bei einer montierten Pendelleuchte zum Boden bzw. in Hauptabstrahlungsrichtung vom Direktlicht weist. Als Rückseite ist dabei bevorzugt eine Seite zu verstehen, welche bei einer montierten Pendelleuchte zur Decke bzw. von der Hauptabstrahlungsrichtung weg weist. Vorder- und Rückseite können parallel zueinander ausgerichtet sein, erstrecken sich jeweils aber nicht notwendigerweise in nur einer einzigen Ebene.

Als Seitenkontur ist dabei bevorzugt ein Bereich des Lichtleiters zu verstehen, welcher bei einer montierten Pendelleuchte zumindest annähernd in horizontale Richtung weist.

Als Einkoppelbereich ist dabei bevorzugt ein Teilbereich der Seitenkontur zu verstehen, welcher eingerichtet ist, von der Lichtquelle abgestrahltes Licht in den Lichtleiter einzukoppeln. Der Einkoppelbereich kann eine dafür speziell eingerichtete Oberflächenstruktur aufweisen. Der Einkoppelbereich kann gegenüber angrenzenden Bereichen der Seitenkontur abgegrenzt sein, sei es durch eine spezielle Oberflächenstruktur oder sei es auf geometrische Weise.

Als eine Anordnung "in optischer Verbindung" ist dabei bevorzugt eine Anordnung zu verstehen, bei welcher das von der Lichtquelle emittierte Licht möglichst vollständig auf den Einkoppelbereich gerichtet ist. Es ist nicht notwendigerweise erforderlich, dass die Lichtquelle direkt angrenzend zum Einkoppelbereich angeordnet ist. Es kann auch ein Reflektor oder ein sonstiges lichtleitendes Element dazwischen angeordnet sein. Bevorzugt ist die Lichtquelle derart relativ zum Einkoppelbereich angeordnet, dass das von ihr emittierte Licht ohne weitere optische Elemente direkt und insbesondere vollständig auf den Einkoppelbereich trifft.

Als Auskoppelbereich ist dabei bevorzugt ein Teilbereich der Seitenkontur zu verstehen, welcher eingerichtet ist, durch den Lichtleiter geleitetes Licht auszukoppeln, insbesondere in einer vorgegebenen Richtung. Der Auskoppelbereich kann eine dafür speziell eingerichtete Oberflächenstruktur aufweisen. Der Auskoppelbereich kann gegenüber angrenzenden Bereichen der Seitenkontur abgrenzt sein, sei es durch eine spezielle Oberflächenstruktur oder sei es auf geometrische Weise.

Als "im Wesentlichen gegenüberliegend" ist dabei bevorzugt eine Anordnung zu verstehen, bei welcher zwei Teilbereiche oder Abschnitte der Seitenkontur in einem Winkel zwischen 90° und 180°, insbesondere 135° bis 180° entlang der Seitenkontur zueinander angeordnet sind. Der Winkel bezieht sich dabei beispielhaft auf eine 360° umlaufende Seitenkontur und ist durch zwei Geraden definiert, die in einer Erstreckungsebene des Lichtleiters liegen. Die Teilbereiche müssen nicht notwendigerweise genau gegenüberliegend (also in einem Winkel von 180° zueinander) angeordnet sein. Ist der Lichtleiter als Rechteck ausgebildet, so kann eine im Wesentlichen gegenüberliegende Anordnung auch eine Anordnung umfassen, bei welcher der eine Teilbereich an der gegenüberliegenden Seite des Rechtecks, aber seitlich versetzt zum anderen Teilbereich angeordnet ist. Mit anderen Worten: das Licht kann von einer Seite oder einem Abschnitt des Lichtleiters zu einer gegenüberliegenden Seite bzw. zu einem gegenüberliegenden Abschnitt geleitet werden. Als Teilbereiche können dabei auch einzelne Längenabschnitte entlang der Seitenkontur verstanden werden.

Gemäß einer Variante ist die Leuchtenanordnung eingerichtet, Licht der Lichtquelle sowohl in einer horizontalen Richtung (also im Wesentlichen entlang der

Erstreckungsebene des Lichtleiters) als auch einer vertikalen Richtung (also im Wesentlichen orthogonal zur Erstreckungsebene des Lichtleiters) abzustrahlen, wobei der Lichtleiter einen Hauptauskoppelbereich für direktes Licht aufweisen kann, in welchem durch den Lichtleiter geleitetes Licht in der vertikalen Richtung auskoppelbar ist. Die zuvor beschriebenen Auskoppelbereiche sind dann als Nebenauskoppelbereiche zu verstehen, welche derart in Bezug auf den Hauptauskoppelbereich angeordnet und ausgerichtet sind, dass durch den Lichtleiter geleitetes Licht auch in der horizontalen Richtung auskoppelbar ist, insbesondere in einem Winkel von mindestens 90° in Bezug auf die vertikale Richtung, bevorzugt mindestens 100°, weiter bevorzugt zwischen 110° und 140°. Bevorzugt ist der Hauptauskoppelbereich durch die Vorderseite des Lichtleiters gebildet. Bevorzugt ist eine derartige Leuchtenanordnung eingerichtet, das in der ersten Richtung ausgekoppelte Licht als Hauptlicht (Direktlicht) und das in der zweiten Richtung ausgekoppelte Licht als Nebenlicht (Indirektlicht) bereitzustellen, insbesondere als Indirektlicht. Mit anderen Worten: das seitlich bzw. in der horizontalen Richtung abgestrahlte Licht ist bevorzugt Indirektlicht. Bevorzugt ist es Licht, welches zumindest teilweise in einer horizontalen Richtung abgestrahlt wird.

Gemäß einem Ausführungsbeispiel ist an der Seitenkontur im Wesentlichen gegenüberliegend zur Lichtquelle ein das Licht der Lichtquelle reflektierender Flächenabschnitt vorgesehen, insbesondere eine hochglänzend spiegelnde Beschichtung, z.B. ein Lack, oder ein Kunststoff. Hierdurch kann Licht von nur einer Lichtquelle besonders effizient an mindestens zwei räumlich getrennten Auskoppelbereichen ausgekoppelt werden. Es kann z.B. Indirektlicht an mehreren Seiten des Lichtleiters bereitgestellt werden, ohne dass eine Vielzahl von Lichtquellen erforderlich ist. Ein reflektierender Flächenabschnitt kann somit also eine besonders effiziente Leuchtenanordnung bereitstellen.

Die zuvor beschriebenen Nebenauskoppelbereiche können dabei derart relativ zu den Lichtquellen angeordnet sein, dass auf jeden Nebenauskoppelbereich jeweils Licht von derjenigen Lichtquelle abstrahlbar ist, welche gegenüberliegend zum Nebenauskoppelbereich angeordnet ist. Ein jeweiliger Nebenauskoppelbereich kann derart in Bezug auf die (jeweils gegenüberliegende) Lichtquelle angeordnet und ausgerichtet sein, dass Licht von der gegenüberliegenden Lichtquelle auf den Nebenauskoppelbereich abstrahlbar ist.

Gemäß einem Ausführungsbeispiel, welches mit einem der vorhergehenden Ausführungsbeispiele kombinierbar ist, ist wenigstens einer der Auskoppelbereiche auf der Seite der Lichtquelle angeordnet. Mit anderen Worten kann wenigstens einer der Auskoppelbereiche auf der Seite der Lichtquelle angeordnet sein. Hierdurch ist das Licht der Lichtquelle an einem der Auskoppelbereiche auskoppelbar ist, welcher auf der Seite der Lichtquelle angeordnet ist. Dabei kann Licht von nur einer Lichtquelle an mindestens zwei räumlich getrennt und vorzugsweise gegenüberliegenden Auskoppelbereichen ausgekoppelt werden. Diese Anordnung liefert z.B. bei einem rechteckigen Lichtleiter einen einfachen, insbesondere symmetrischen Aufbau, bei welchem die Anzahl der erforderlichen Komponenten gering gehalten werden kann. Die Leuchtenanordnung kann z.B. zwei Auskoppelbereiche und zwei reflektierende Flächenabschnitte aufweisen, die jeweils an den gegenüberliegenden Seitenflächen bzw. gegenüberliegenden Seitenkonturabschnitten angeordnet sind.

Gemäß einem Ausführungsbeispiel, welches mit einem der vorhergehenden Ausführungsbeispiele kombinierbar ist, weist die Leuchtenanordnung im Bereich des Einkoppelbereichs angrenzend an die Lichtquelle einen reflektierenden Flächenabschnitt vorzugsweise in Form eines Reflektors, insbesondere einer reflektierenden Folie, auf, und/oder die Lichtquelle ist auf einem Träger angeordnet, welcher eine dem Einkoppelbereich zugewandte reflektierende Oberfläche aufweist. Eine Anordnung eines reflektierenden Elements im Bereich des Einkoppelbereichs kann einen einfachen Aufbau des Lichtleiters ermöglichen. Der Einkoppelbereich muss nicht notwendigerweise strukturiert werden. Vielmehr kann ein Teilbereich des Einkoppelbereichs zum Einkoppeln des Lichts vorgesehen sein, und andere Teilbereiche können mittels des reflektierenden Elements derart abgedeckt werden, dass auf den Einkoppelbereich geleitetes Licht dort nicht ausgekoppelt wird, sondern zur Abstrahlung z.B. über die Auskoppelbereiche in den Lichtleiter zurückreflektiert wird.

Gemäß einem Ausführungsbeispiel, welches mit einem der vorhergehenden Ausführungsbeispiele kombinierbar ist, ist im Wesentlichen gegenüberliegend zur mindestens einen Lichtquelle mindestens eine weitere Lichtquelle in optischer Verbindung mit einem durch einen Teilberiech der Seitenkontur gebildeten weiteren Einkoppelbereich angeordnet. Eine Mehrzahl von Lichtquellen kann sicherstellen, dass Licht an den mehreren Auskoppelbereichen zumindest annähernd auf dieselbe Weise ausgekoppelt werden kann, insbesondere mit derselben Intensität bzw. Lichtstärke. Eine Mehrzahl von Lichtquellen kann auch eine besonders homogene (indirekte) Beleuchtung sicherstellen.

Dabei kann eine erste Lichtquelle an einem ersten Einkoppelbereich angeordnet sein und eine zweite Lichtquelle an einem zweiten Einkoppelbereich. Die Leuchtenanordnung kann auch eine Mehrzahl erster bzw. zweiter Lichtquellen aufweisen, welche jeweils relativ zum ersten bzw. zweiten Einkoppelbereich angeordnet sind.

Gemäß einem Ausführungsbeispiel, welches mit einem der vorhergehenden Ausführungsbeispiele kombinierbar ist, stehen die Auskoppelbereiche seitlich in Bezug auf den Einkoppelbereich hervor. Durch eine seitlich hervorstehende bzw. versetzte Anordnung kann z.B. sichergestellt werden, dass das ausgekoppelte Licht außerhalb vom Lichtleiter weiter umgeleitet oder reflektiert werden kann, ohne dass der Einkoppelbereich oder eine dort vorgesehene Lichtquelle bzw. Platine hinderlich ist beim Weiterleiten des ausgekoppelten Lichts. Es kann sichergestellt werden, dass der Einkoppelbereich räumlich nicht mit irgendwelchen Reflektoren oder sonstigen optischen Elementen (z.B. Blende) kollidiert. Die Auskoppelbereiche sind bevorzugt in seitlicher bzw. radialer Richtung nach außen beabstandet zum Einkoppelbereich vorgesehen. Die Auskoppelbereiche sind seitlich freigegeben. Das ausgekoppelte Licht kann auf beliebige Weise umgelenkt werden, sei es in die Richtung, in welche die Rückseite weist (bei Pendelleuchten insbesondere nach oben), oder sei es in die Richtung, in welche die Vorderseite weist (bei Pendelleuchten insbesondere nach unten).

Als Erstreckungsebene ist dabei bevorzugt eine Ebene zu verstehen, in welcher die Rückseite oder die Vorderseite des Lichtleiters angeordnet ist bzw. die der flächigen Ausbildung des Lichtleiters entspricht und in derer sich der Lichtleiter erstreckt. Der Lichtleiter weist in der Erstreckungsebene bevorzugt die größten Abmessungen auf, also z.B. die größte Breite und/oder die größte Länge. Eine Dicke des flächigen Lichtleiters kann dabei bevorzugt orthogonal zur Erstreckungsebene definiert werden.

Gemäß einem Ausführungsbeispiel, welches mit einem der vorhergehenden Ausführungsbeispiele kombinierbar ist, weist die Seitenkontur eine Abstufung auf, welche eingerichtet ist, den Einkoppelbereich von den Auskoppelbereichen räumlich und optisch zu trennen. Hierdurch kann der Lichtleiter mit einer einfache Geometrie bzw. Struktur bereitgestellt werden. Insbesondere sind keine Hinterschneidungen oder Ausnehmungen erforderlich. Die Abstufung kann dabei auch eine Lagerung des Lichtleiters auf einem Gehäuseteil sicherstellen. Die Abstufung kann z.B. auf einfache Weise an einer zylindrischen Platte vorgesehen werden, z.B. in Verbindung mit einem Strangguss-Verfahren.

Als Abstufung ist dabei bevorzugt ein Absatz oder eine Kante zu verstehen, durch welche(n) die Auskoppelbereiche vom Einkoppelbereich abgesetzt werden. Die Abstufung kann z.B. durch zwei aneinandergrenzende Flächenabschnitte gebildet sein, welche in einem Winkel von z.B. 45° bis 135°, bevorzugt 60° bis 120°, weiter bevorzugt 80° bis 100°, insbesondere 90° zueinander angeordnet sind. Die Abstufung kann die Seitenkontur des Lichtleiters im Querschnitt L-förmig ausbilden, zumindest abschnittsweise.

Bevorzugt ist die Seitenkontur durch drei Flächen gebildet, wobei eine der Flächen zumindest teilweise den Einkoppelbereich bildet und eine weitere der Flächen zumindest teilweise den Auskoppelbereich bildet. Eine (dritte) zwischen diesen beiden Flächen angeordnete Fläche kann dabei die Abstufung bilden, zumindest teilweise.

Gemäß einem Ausführungsbeispiel, welches mit einem der vorhergehenden Ausführungsbeispiele kombinierbar ist, ist mindestens einer der Auskoppelbereiche als seitlich bzw. radial nach außen hervorstehender Rand ausgebildet.

Ein den Einkoppelbereich nach außen überlappender Rand kann sicherstellen, dass aus den Auskoppelbereichen ausgekoppeltes Licht auf flexible Weise in weitgehend beliebige Richtungen weitergeleitet werden kann. Insbesondere wird ausgekoppeltes Licht nicht auf die Lichtquelle geworfen, sondern kann auf einen Reflektor oder dergleichen optisches Element geleitet werden.

Gemäß einem Ausführungsbeispiel, welches mit einem der vorhergehenden Ausführungsbeispiele kombinierbar ist, sind die Auskoppelbereiche näher an der Rückseite angeordnet als der Einkoppelbereich. Hierdurch können die Auskoppelbereiche das Licht auf zweckdienliche Weise für eine Indirektbeleuchtung bereitstellen. Das Licht kann z.B. entgegengesetzt zu einer Hauptbeleuchtungsrichtung ausgerichtet werden, bei Pendelleuchten insbesondere nach oben zur Decke, ohne dass irgendwelche Lichtquellen im Wege sind.

Gemäß einem Ausführungsbeispiel, welches mit einem der vorhergehenden Ausführungsbeispiele kombinierbar ist, sind die Auskoppelbereiche entlang eines zumindest annähernd parallel zu einer Erstreckungsebene des Lichtleiters verlaufenden Längenabschnitts der Seitenkontur ausgebildet, insbesondere umlaufend. Hierdurch kann das Licht über einen großen Bereich bzw. Abschnitts der Seitenkontur ausgekoppelt werden. Das aus den Auskoppelbereichen ausgekoppelte Licht kann dabei eine große Fläche beleuchten und gut für eine flächige, diffuse Indirektbeleuchtung verwendet werden. Bei einer umlaufenden Ausgestaltung kann sichergestellt werden, dass das Licht besonders homogen abgestrahlt wird.

Gemäß einem Ausführungsbeispiel, welches mit einem der vorhergehenden Ausführungsbeispiele kombinierbar ist, weist mindestens einer der Auskoppelbereiche eine Fläche auf, die schräg in Bezug auf eine Erstreckungsebene des Lichtleiters angeordnet ist, insbesondere in einem Winkel von 10° bis 80°, bevorzugt 20° bis 70°, weiter bevorzugt 35° bis 55°, besonders bevorzugt 40° bis 50°, insbesondere 45°.

Hierdurch kann das Licht in eine gewünschte Richtung gebrochen werden, bei Pendelleuchten insbesondere nach oben. Ein Reflektor oder irgendwelche optischen Elemente zum Umlenken des ausgekoppelten Lichts sind nicht notwendigerweise erforderlich. Vielmehr kann bereits dank der Ausrichtung der Auskoppelbereiche das Licht in der gewünschten Richtung ausgekoppelt werden. An der schräg angeordneten Fläche kann das Licht scharf entblendet werden. Auch kann verhindert werden, dass sich Staub auf dem Auskoppelbereich bzw. der Fläche ablagert, insbesondere indem die schräge Fläche bei einer Deckenleuchte zum Boden hin weist.

Gemäß einem Ausführungsbeispiel, welches mit einem der vorhergehenden Ausführungsbeispiele kombinierbar ist, weist der Lichtleiter in den Auskoppelbereichen einen in einer Richtung im Wesentlichen orthogonal zur seitlichen Richtung - zur Rückseite des Lichtleiters hin - hervorstehenden Rand auf. Der hervorstehende Rand kann in Bezug auf eine Erstreckungsebene des Lichtleiters als axial hervorstehender Rand beschrieben werden. Die axiale Richtung entspricht dabei bevorzugt einer bzgl. der Erstreckungsebene des Lichtleiters gesehen orthogonalen Achse bzw. Richtung, vorliegend ausgehend von dem Lichtleiter bspw. einer Hauptbestrahlungsrichtung, bei Pendelleuchten also der Vertikalen. Hierdurch können die Auskoppelbereiche mit einem großen Querschnitt ausgeführt werden, ohne dass der Lichtleiter besonders dick ausgeführt sein muss. Mit anderen Worten können die Auskoppelbereiche bzw. der Lichtleiter im Bereich der Auskoppelbereiche einen vergrößerten Querschnitt aufweisen. Als vergrößerter Querschnitt ist dabei bevorzugt eine Ausgestaltung des Lichtleiters zu verstehen, bei welcher der Lichtleiter derart geformt ist, dass eine Fläche zum Auskoppeln des Lichts größer ausgebildet werden kann als bei einem Lichtleiter ohne vergrößerten Querschnitt. Hierzu kann der Lichtleiter einen verstärkten Rand, einen Absatz, eine Verbreiterung oder irgendeinen sonstigen z.B. schräg in Bezug auf die Erstreckungsebene angeordneten Flächenabschnitt aufweisen.

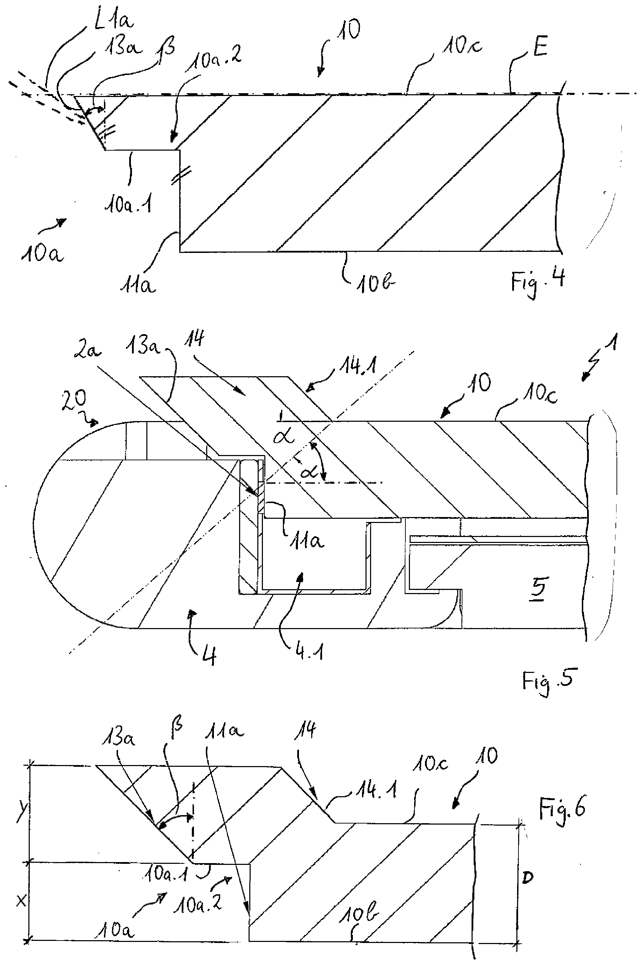

Der hervorstehende Rand kann im Querschnitt z.B. die Geometrie eines Parallelogramms aufweisen. Ein hervorstehender Rand kann einen vergrößerten Querschnitt der Auskoppelbereiche sicherstellen. Der vergrößerte Querschnitt kann z.B. doppelt so groß sein wie ein Querschnitt, welcher sich ergibt, wenn der Lichtleiter mit einer konstanten Dicke bzw. ohne vergrößerten Querschnitt ausgeführt ist. Die Erstreckung x des Einkoppelbereichs und die Erstreckung y der Auskoppelbereiche in axialer also vertikaler Richtung ist dabei in der Summe bevorzugt größer als die Dicke D des Lichtleiters (vgl. auch Figur 6). Liegt ein Verhältnis x:y der Axialerstreckung x des Einkoppelbereichs zur Axialerstreckung y der Auskoppelbereiche bei einem Lichtleiter mit konstanter Dicke bzw. ohne vergrößerten Querschnitt z.B. im Bereich von 1:1 bis 1:2, so liegt dieses Verhältnis x:y bei einem Lichtleiter mit einem hervorstehenden Rand bzw. vergrößertem Querschnitt z.B. im Bereich von 1:2 bis 1:5, vorzugsweise 1:3. Ein Verhältnis der Querschnittsgröße des Einkoppelbereichs zur Querschnittsgröße des Auskoppelbereichs bzw. der Auskoppelbereiche liegt bevorzugt im Bereich von 1:10 bis 1:1,5, weiter bevorzugt 1:8 bis 1:3, besonders bevorzugt 1:5. Hierdurch kann das ausgekoppelte Licht über eine größere Fläche ausgekoppelt werden und gut gestreut werden, auch ohne zusätzliche optische Elemente oder Reflektoren. Der Einkoppelbereich kann verhältnismäßig klein sein. Bevorzugt weist der Einkoppelbereich eine Größe entsprechend der Größe der Lichtquelle oder der Größe einer lichtabstrahlenden Fläche oder Linse der Lichtquelle auf, insbesondere um Verluste durch auf den Einkoppelbereich reflektiertes Licht zu verringern. Bevorzugt ist hierzu das Leuchtmittel/die Lichtquelle (also insbesondere eine Leuchtdiode; LED) an der dem Lichtleiter zugewandten Seite der Platine angeordnet sein, um den Einkoppelbereich und somit den Lichtleiter so klein wie möglich zu halten. Die Erfindung ist nicht auf die zuvor beschriebenen Verhältnisse der Axialerstreckung bzw. Querschnittsgröße bzw. -fläche von Einkoppelbereich zu Auskoppelbereich beschränkt; vielmehr kann das Verhältnis entsprechend der jeweiligen Anwendung der Leuchtenanordnung aufgrund der erfindungsgemäßen Ausgestaltung frei gewählt werden.

Gemäß einem Ausführungsbeispiel, welches mit einem der vorhergehenden Ausführungsbeispiele kombinierbar ist, ist der hervorstehende Rand außerhalb von einem Abstrahlbereich der Lichtquelle angeordnet. Hierdurch kann sichergestellt werden, dass eingekoppeltes Licht zunächst in seitlicher Richtung im Lichtleiter (beispielsweise mittels Totalreflexion) weitergeleitet wird und nicht direkt auf den hervorstehenden Rand geworfen wird. Mit anderen Worten ist der vergrößerte Querschnitt derart angeordnet, dass Licht der Lichtquelle nicht direkt von der Lichtquelle auf den vergrößerten Querschnitt abgestrahlt wird. Direkt von der Lichtquelle abgestrahltes Licht kann dann nicht auf den Querschnitt treffen. Der vergrößerte Querschnitt ist neben einem optischen Abstrahlkegel der Lichtquelle angeordnet. Der vergrößerte Querschnitt wird nicht direkt durch die Lichtquelle bestrahlt.

Der Abstrahlbereich kann z.B. durch einen Öffnungswinkel α zwischen 40° und 50° charakterisiert werden, z.B. 45°. Als Abstrahlbereich ist dabei bevorzugt ein Bereich zu verstehen, in welchen das Licht der Lichtquelle direkt von der Lichtquelle ausgehend gelangen kann, ohne umgelenkt oder reflektiert worden zu sein.

Gemäß einem Ausführungsbeispiel, welches mit einem der vorhergehenden Ausführungsbeispiele kombinierbar ist, weist der hervorstehende Rand bzw. der vergrößerte Querschnitt einen schräg in Bezug auf die Rückseite des Lichtleiters angeordneten Flächenabschnitt auf, welcher an die Rückseite angrenzt, wobei der Flächenabschnitt bevorzugt zumindest annähernd parallel zu einer Fläche der Auskoppelbereiche ausgerichtet ist. Hierdurch kann im Lichtleiter weitergeleitetes Licht auf effiziente Weise zu den Auskoppelbereichen weitergeleitet und an einer verhältnismäßig großen Fläche ausgekoppelt werden. Auch kann der Bereich des Lichtleiters, welcher zwischen den Einkoppelbereichen angeordnet ist, schlank bzw. dünn ausgeführt werden. Hierdurch ergibt sich nicht zuletzt auch ein geringes Eigengewicht des Lichtleiters bzw. ein geringer Materialverbrauch.

Gemäß einem Ausführungsbeispiel, welches mit einem der vorhergehenden Ausführungsbeispiele kombinierbar ist, ist der Lichtleiter plattenförmig mit zumindest annähernd parallel zueinander angeordneter Vorder- und Rückseite ausgebildet. Hierdurch kann ein Lichtleiter mit einer einfachen Struktur bereitgestellt werden, welcher auf einfache Weise in eine Gehäuse-Rahmenkonstruktion eingesetzt werden kann. Als plattenförmiger Lichtleiter ist dabei bevorzugt ein Lichtleiter mit einer flachen, ebenen Geometrie zu verstehen, insbesondere mit einer Vorderseite, die zumindest annähernd parallel zu einer Rückseite angeordnet ist. Der Lichtleiter kann dabei z.B. oval, rund oder eckig ausgebildet sein, nicht nur rechteckig, sondern insbesondere auch als Vieleck mit mehr als vier Ecken. Der Lichtleiter kann eine umlaufende Seitenkontur aufweisen, sei es ohne Kanten oder Absätze, also eine stetig umlaufende Seitenkontur, sei es mit Unstetigkeiten.

Gemäß einem Ausführungsbeispiel, welches mit einem der vorhergehenden Ausführungsbeispiele kombinierbar ist, ist an der Vorderseite und/oder Rückseite des Lichtleiters mindestens ein optisches Element, insbesondere ein das Licht streuendes Element oder eine Reflektorschicht (bevorzugt aus hochreflektierendem, geschäumten, weißen Polyethylenterephthalat PET), angeordnet, welche(s) eingerichtet ist (sind), das Licht der Lichtquelle auf die Vorderseite zu richten, wobei die Vorderseite einen Lichtaustrittsabschnitt zum Auskoppeln des Lichts aufweist. Hierdurch kann seitlich eingekoppeltes Licht in axialer (bzw. vertikaler) Richtung ausgekoppelt werden, bei Pendelleuchten insbesondere nach unten. Dies ermöglicht einen einfachen Aufbau der Leuchte, z.B. indem alle Lichtquellen seitlich in einem Gehäuse angeordnet werden und damit (von unten bzw. von einem auf dem Boden stehenden Betrachter) auch nicht sichtbar sind.

Als optisches Element ist dabei bevorzugt eine Schicht oder eine Beschichtung oder eine definierte oder undefinierte Oberflächenstruktur oder auch eine Mehrzahl von Prismen oder sonstiger Lichtleitkörper oder Streuelemente zu verstehen, welche eingerichtet sind, Licht zu streuen und/oder (neu) gerichtet umzulenken. Es können z.B. auch Mikropartikel oder Dichteunterschiede beim Material des Lichtleiters vorgesehen sein.

Gemäß einem Ausführungsbeispiel, welches mit einem der vorhergehenden Ausführungsbeispiele kombinierbar ist, weist die Leuchtenanordnung ein Ableitelement auf, welches sich seitlich bzw. radial nach außen zumindest bis zu den Auskoppelbereichen erstreckt. Hierdurch kann vermieden werden, dass seitlich ausgekoppeltes Licht in einer ungewünschten Richtung abstrahlt. Insbesondere kann vermieden werden, dass seitlich ausgekoppeltes Licht in derjenigen Richtung abgestrahlt wird, in welche die Vorderseite des Lichtleiters weist.

Als Ableitelement ist dabei bevorzugt ein optisches Element zu verstehen, welches unabhängig vom Lichtleiter anordenbar ist, und mittels welchem das bereits ausgekoppelte Licht weiter umgeleitet werden kann. Das Ableitelement kann z.B. durch eine einzelne (insbesondere weiße) Reflektorschicht oder Reflektorfläche oder Linse (insbesondere eine stabförmige Linse) oder Blende gebildet sein oder eine Mehrzahl einzelner optischer Elemente aufweisen. Das Ableitelement kann z.B. an einer Fläche montiert sein, welche sich zwischen dem Einkoppelbereich und dem Auskoppelbereich des Lichtleiters erstreckt. In einer einfachen Form ist das Ableitelement ein Teil eines Gehäuses einer Leuchte, welches zwecks effektiver Reflexion mit einer reflektierenden Schicht beschichtet ist.

Gemäß einem Ausführungsbeispiel, welches mit einem der vorhergehenden Ausführungsbeispiele kombinierbar ist, ist das Ableitelement eine Blende, welche seitlich bzw. radial nach außen von den Auskoppelbereichen hervorsteht und zur Rückseite weist. Die Blende ist bevorzugt zur Rückseite hin konkav gewölbt. Das den Auskoppelbereichen abgewandte Ende des Ableitelements ist vorzugsweise von der Vorderseite weg gewölbt. Die Blende kann sich dabei bogenförmig um den Auskoppelbereich herum erstrecken. Hierdurch kann das ausgekoppelte Licht auf einfache Weise umgeleitet werden, insbesondere als nach oben (bei Pendelleuchten also zur Decke) umgeleitetes Indirektlicht. Die Blende kann das ausgekoppelte Licht auch streuen oder stärker in eine gewünschte Richtung umlenken. Hierdurch kann die Ausrichtung des Auskoppelbereichs besonders frei bzw. individuell gewählt werden. Insbesondere kann vermieden werden, dass eine Fläche des Auskoppelbereichs in einem besonders spitzen Winkel zur Rückseite ausgerichtet sein muss. Dies könnte die Festigkeit des Lichtleiters nachteilig beeinflussen. Die Blende kann ein einfaches, frei formbares, bevorzugt konkav gewölbtes Gehäuseteil sein.

Gemäß einem Ausführungsbeispiel, welches mit einem der vorhergehenden Ausführungsbeispiele kombinierbar ist, weist die Blende ein das ausgekoppelte Licht streuendes optisches Element auf. Hierdurch kann auf einfache Weise ein flächig abgestrahltes Indirektlicht erzeugt werden, auch mit punktförmigen Lichtquellen. Es kann eine sanfte Indirekt-Beleuchtung in Verbindung mit einer verhältnismäßig starken Direktbeleuchtung bereitgestellt werden.

Gemäß einem zweiten Aspekt betrifft die Erfindung eine Leuchtenanordnung mit einem flächigen Lichtleiter und mindestens zwei Lichtquellen, wobei der Lichtleiter eine Vorderseite und eine Rückseite und eine die Vorder- und Rückseite verbindende Seitenkontur aufweist, und wobei die Lichtquellen jeweils in optischer Verbindung mit einem Einkoppelbereich des Lichtleiters zum Einkoppeln von Licht der Lichtquelle in den Lichtleiter angeordnet sind, bei welcher die Einkoppelbereiche jeweils durch einen Teilbereich der Seitenkontur gebildet sind und der Lichtleiter Auskoppelbereiche aufweist, welche durch mindestens zwei im Wesentlichen gegenüberliegende Teilbereiche der Seitenkontur gebildet sind, um das Licht der Lichtquellen über die Auskoppelbereiche seitlich auszukoppeln, wobei die Leuchtenanordnung im Bereich des Einkoppelbereichs angrenzend an die Lichtquellen jeweils eine reflektierende Oberfläche aufweist, wobei die Seitenkontur vorzugsweise eine Abstufung aufweist, welche eingerichtet ist, den Einkoppelbereich von den Auskoppelbereichen räumlich und optisch zu trennen, wobei mindestens einer der Auskoppelbereiche eine Fläche aufweist, die vorzugsweise schräg in Bezug auf eine Erstreckungsebene des Lichtleiters angeordnet ist, und wobei ein Lichtaustrittsabschnitt an der Vorderseite vorgesehen ist, über den Licht der Lichtquellen im Wesentlichen orthogonal zur Erstreckungsebene ausgekoppelt werden kann. Bei diesem Ausführungsbeispiel kann mittels einem einfach aufgebauten Lichtleiter und einer Mehrzahl von Lichtquellen eine flächige Indirektbeleuchtung erzeugt werden. Die an der Seitenkontur angeordneten Auskoppelbereiche können als Nebenauskoppelbereiche für Indirektlicht bezeichnet werden, und der an der Vorderseite angeordnete Auskoppelbereich kann als Hauptauskoppelbereich für eine Direktbeleuchtung, insbesondere bei einer Pendelleuchte, bezeichnet werden.

Gemäß einem dritten Aspekt betrifft die Erfindung eine Leuchte, insbesondere eine Pendelleuchte, Einbauleuchte oder Anbauleuchte, mit einer erfindungsgemäßen Leuchtenanordnung, welche ebenso die zuvor genannte Aufgabe löst. Vorzugsweise weist die Leuchte ein Gehäuse auf, welches ein Ableitelement, insbesondere eine Blende mit einem das ausgekoppelte Licht streuenden optischen Element und/oder mit einem Reflektor, umfasst, welches derart in Bezug auf die Auskoppelbereiche angeordnet ist, dass aus den Auskoppelbereichen ausgekoppeltes Licht seitlich auf das Ableitelement trifft. Mit dieser Leuchte kann das seitlich ausgekoppelte Licht gestreut werden und flächig abgestrahlt werden, z.B. um orthogonal oder sogar entgegengesetzt zu einer Hauptabstrahlungsrichtung abgestrahltes Indirektlicht bereitzustellen.

Als eine Anbauleuchte ist dabei bevorzugt eine Leuchte zu verstehen, welche nicht pendelnd aufgehängt wird, sondern fest in Bezug auf eine Decke oder Seitenwand eines Raumes an der Decke oder Seitenwand montiert wird. Eine Einbauleuchte ist zumindest teilweise in die Decke oder Seitenwand eingesetzt. Die Einbauleuchte kann aus der Decke hervorstehen, insbesondere auch mit den Auskoppelbereichen.

Wahlweise kann die Leuchtenanordnung der Leuchte auch Auskoppelbereiche aufweisen, welche sich bis zu einem seitlichen Rand eines Gehäuses der Leuchte erstrecken oder das Gehäuse seitlich überragen. Hierdurch kann das ausgekoppelte Licht direkt an die Decke/Wand gestrahlt werden. Es ist nicht erforderlich, das Gehäuse in einer bestimmten Geometrie derart bereitzustellen, dass das ausgekoppelte Licht in einer bestimmten Richtung weitergeleitet werden kann. Vielmehr kann das Licht schräg (insbesondere nach oben) an einer schrägen Fläche der Auskoppelbereiche ausgekoppelt werden.

In den nachfolgenden Figuren wird die Erfindung anhand von mehreren Ausführungsbeispielen näher erläutert. Bei in einzelnen Figuren nicht explizit beschriebenen Bezugszeichen wird auf die anderen Figuren verwiesen. Es zeigen:
Figur 1 in schematischer Darstellung in einer Seitenansicht eine Leuchtenanordnung gemäß einem Ausführungsbeispiel der Erfindung;
Figur 2 in schematischer Darstellung in einer geschnittenen Seitenansicht eine Leuchte mit einer Leuchtenanordnung gemäß einem Ausführungsbeispiel der Erfindung;
Figur 3 in schematischer Darstellung in einer detaillierten geschnittenen Seitenansicht einen Teilausschnitt X der in der Figur 2 gezeigten Leuchtenanordnung;
Figur 4 in schematischer Darstellung in einer Schnittansicht einen Teil eines Lichtleiters der in der Figur 3 gezeigten Leuchtenanordnung;
Figur 5 in schematischer Darstellung in einer Seitenansicht einen Teilausschnitt einer Leuchtenanordnung gemäß einem weiteren Ausführungsbeispiel der Erfindung;
Figur 6 in schematischer Darstellung in einer Schnittansicht einen Teil eines Lichtleiters der in der Figur 5 gezeigten Leuchtenanordnung;
Figur 7 in schematischer Darstellung in einer Seitenansicht einen Teilausschnitt einer Leuchtenanordnung gemäß einem weiteren Ausführungsbeispiel der Erfindung;
Figur 8 in schematischer Darstellung in einer Seitenansicht einen Teilausschnitt einer Leuchtenanordnung gemäß einem weiteren Ausführungsbeispiel der Erfindung;
Figur 9 in schematischer Darstellung in einer geschnittenen Seitenansicht eine Leuchte mit einer Leuchtenanordnung gemäß einem weiteren Ausführungsbeispiel der Erfindung; und
Figur 10 in schematischer Darstellung in einer perspektivischen Seitenansicht einzelne Komponenten einer Leuchte gemäß einem der Ausführungsbeispiele der Erfindung.

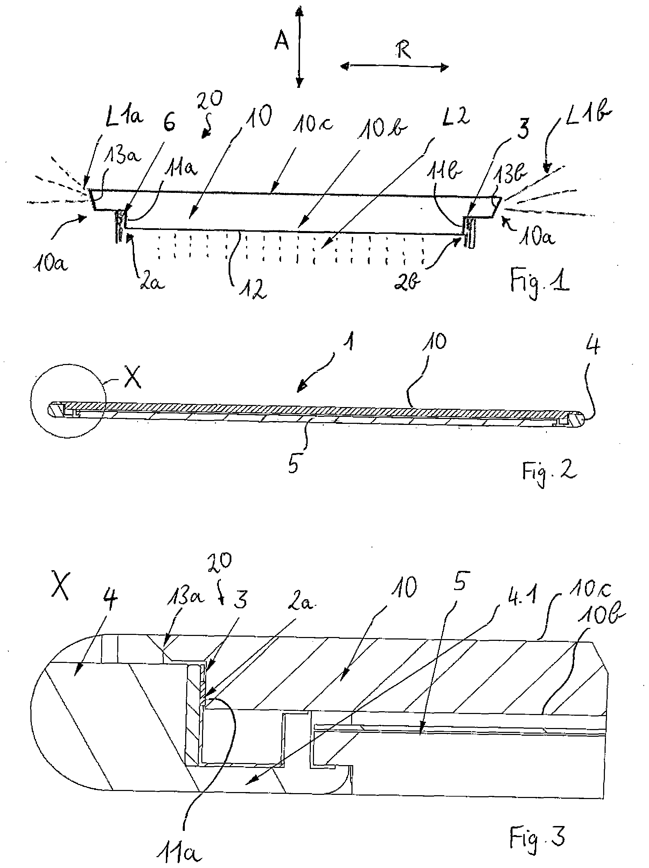

In der Figur 1 ist eine Leuchtenanordnung 20 gezeigt, bei welcher ein Lichtleiter 10 Licht in einer seitlichen Richtung R und in einer axialen Richtung A auskoppelt. Der Lichtleiter 10 ist flächig ausgebildet und weist eine Seitenkontur 10a sowie eine durch die Seitenkontur 10a verbundene Vorderseite 10b und eine Rückseite 10c auf. An der Seitenkontur 10a sind an gegenüberliegenden Teilbereichen eine erste Lichtquelle 2a und eine zweite Lichtquelle 2b angeordnet, mittels welchen Licht in den Lichtleiter 10 eingekoppelt werden kann. Der Lichtleiter 10 weist hierzu an der Seitenkontur 10a einen ersten Einkoppelbereich 11a und einen zweiten Einkoppelbereich 11b auf, zu welchem die jeweilige Lichtquelle in optischer Verbindung angeordnet ist. Das am zweiten Einkoppelbereich 11b eingekoppelte Licht wird auf einen ersten Auskoppelbereich 13a geleitet, in welchem das Licht seitlich ausgekoppelt wird. Das dort ausgekoppelte Licht ist durch L1a bezeichnet. Ebenso wird das im ersten Einkoppelbereich 11a eingekoppelte Licht auf einen zweiten Auskoppelbereich 13b geleitet, in welchem es ebenfalls als seitlich ausgekoppeltes Licht L1b ausgekoppelt wird.

Das von den beiden Lichtquellen 2a, 2b eingekoppelte Licht kann zusätzlich auch an der Vorderseite 10b als Licht L2 ausgekoppelt werden. Dieses Licht L2 dient bevorzugt einer Hauptbestrahlung (Direktlicht), insbesondere als eine von einer Pendelleuchte auf einen Tisch oder Boden eines Zimmers geworfenen Bestrahlung. Hierzu weist der Lichtleiter 10 an der Vorderseite 10b einen Lichtaustrittsabschnitt 12 auf, welcher bevorzugt an der gesamten Vorderseite ausgebildet ist.

Die in der Figur 1 gezeigte Leuchtenanordnung weist ferner im Bereich der beiden Lichtquellen 2a, 2b (also insbesondere im Bereich der Einkoppelbereiche 11a, 11b) jeweils eine Folie 3 oder ein anders reflektierendes Element oder eine reflektierende Beschichtung (im Folgenden auch als reflektierender Flächenabschnitt 3 bezeichnet) auf, mittels welcher Licht reflektiert werden kann, insbesondere Licht, welches von einer in seitlicher Richtung gesehen gegenüberliegenden Lichtquelle auf den jeweiligen Einkoppelbereich geworfen wird. Die reflektierenden Folien 3 können sicherstellen, dass das Licht von der ersten bzw. zweiten Lichtquelle jeweils auf den ersten bzw. zweiten Auskoppelbereich zurück reflektiert werden kann. So ist es auch denkbar, nur eine einzige Lichtquelle vorzusehen, deren Licht zum Einen auf einen entfernten (gegenüberliegenden) Auskoppelbereich direkt und zum Anderen auf einen bezüglich der Lichtquelle umliegenden Auskoppelbereich durch Reflexion an der entfernten reflektierenden Oberfläche geleitet und dort ausgekoppelt wird. Die Leuchtenanordnung weist ferner einen Träger 6 bzw. eine Aufnahme für die jeweilige Lichtquelle auf, insbesondere in Form einer Platine. Die Platine 6 ist am jeweiligen Einkoppelbereich angeordnet und kann sich längs des Einkoppelbereichs erstrecken. Vorzugsweise ist die Platine mit einer dem Lichtleiter bzw. Einkoppelbereich zugewandten reflektierenden Oberfläche versehen und stellt somit den reflektierenden Flächenabschnitt 3 bereit.

In der Figur 2 ist eine Leuchte 1 gezeigt, bei welcher an einer Oberseite ein erfindungsgemäßer Lichtleiter 10 angeordnet ist, welcher auf einem Gehäuse 4 befestigt ist. Das Gehäuse 4 kann dabei auch einen Kühlkörper aufnehmen. Unterhalb vom Lichtleiter 10 ist eine Optikanordnung 5 angeordnet, welche ebenfalls vom Gehäuse 4 aufgenommen ist. Die Optikanordnung 5 kann sicherstellen, dass das im Lichtleiter 10 weitergeleitete Licht auf eine bestimmte Weise in axialer Richtung abgestrahlt werden kann. Die Optikanordnung 5 kann als Optiksandwich aufgebaut sein, und z.B. einen Diffusor oder eine Lichtleiterplatte oder eine Mikropyramidenoptik umfassen. Der Lichtleiter ist vorzugsweise flächig als ebene Platte ausgebildet, wobei Vorder- und Rückseite bevorzugt parallel zueinander angeordnet sind.

In der Figur 3 ist gemäß der in Figur 2 angedeuteten Detailansicht X ein Randbereich des Lichtleiters 10 gezeigt, wie er relativ in Bezug auf das Gehäuse 4 angeordnet ist. Die Leuchte ist vorzugsweise spiegelsymmetrisch ausgebildet, so dass der Übersichtlichkeit halber nur die linke Seite der Leuchte beschrieben wird. Die erste Lichtquelle 2a ist vorzugsweise an einer sich in axialer Richtung erstreckenden Fläche des Gehäuses 4 angeordnet, und der Lichtleiter 10 liegt mit dem ersten Einkoppelbereich 11a an der ersten Lichtquelle 2a an. Der Einkoppelbereich 11a erstreckt sich ebenfalls vorzugsweise in axialer Richtung.

Gemäß Figur 3 steht der erste Auskoppelbereich 13a in radialer Richtung, also in seitlicher Richtung in Bezug auf den Einkoppelbereich 11a nach außen hervor. Der gezeigte Auskoppelbereich 13a weist ferner eine in Bezug auf die axiale Richtung schräg angeordnete Fläche auf. Mit anderen Worten weist diese Fläche nicht nur in die radiale bzw. seitliche Richtung, sondern auch in axiale Richtung. Ein Winkel zu einer Erstreckungsebene des Lichtleiters oder zu der Vertikalen beträgt in etwa 45° in Bezug auf die seitliche Richtung, wobei die Erfindung nicht auf diesen Winkel beschränkt ist, sondern der Winkel gemäß der gewünschten Abstrahlrichtung des auszukoppelnden Lichts auch frei gewählt werden kann.

Das Gehäuse 4 weist einen Bereich 4.1 auf, in welchem Sensoren oder weitere Komponenten der Leuchtenanordnung, insbesondere zur (automatischen) Beleuchtungssteuerung, angeordnet werden können.

Die Optikanordnung 5 liegt bevorzugt auf einem unteren Rand des Gehäuses 4 auf. Sowohl die Optikanordnung 5 als auch der Lichtleiter 10 können von oben in das Gehäuse eingesetzt werden. Der Lichtleiter 10 kann dabei mit einem zu den Auskoppelbereichen führenden Abschnitt bzw. einem Rand auf dem Gehäuse aufliegen oder das Gehäuse in seitlicher Richtung zumindest überlappen, ohne im Überlappungsbereich direkt auf dem Gehäuse aufzuliegen. Ferner ist gezeigt, dass angrenzend zur Lichtquelle 2a im Bereich des Einkoppelbereichs 11a der reflektierende Flächenabschnitt 3, z.B. in Form eines Reflektors, angeordnet ist. Hierdurch kann sichergestellt werden, dass Licht nicht dissipiert wird, also dass auf den Einkoppelbereich 11a treffendes (z.B. zurückreflektiertes) Licht wieder zurück in den Lichtleiter 10 eingekoppelt werden kann.

In der Figur 4 ist eine Detailansicht des Lichtleiters 10 aus Figur 3 gezeigt, welcher die Rückseite 10c aufweist, die sich in einer Erstreckungsebene E erstreckt. Die Rückseite 10c ist vollständig eben ausgebildet. Zumindest annähernd parallel zur Rückseite 10c ist die Vorderseite 10b angeordnet. Die Seitenkontur 10a weist in der Schnittansicht gemäß dem gezeigten Ausführungsbeispiel drei einzelne Flächenabschnitte auf, von denen ein erster Flächenabschnitt bzw. eine erste Fläche den Einkoppelbereich 11a bildet und eine zweite Fläche bzw. ein zweiter Flächenabschnitt den Auskoppelbereich 13a bildet. Zwischen dem Einkoppelbereich und dem Auskoppelbereich ist eine diese verbindende weitere Fläche bzw. ein weiterer Flächenabschnitt 10a.1 angeordnet, welcher einen Absatz 10a.2 der Seitenkontur bzw. in einem Teilbereich der Seitenkontur bildet. Durch diesen Absatz 10a.2 ist der Lichtleiter 10 mit einem seitlich bzw. radial nach außen hervorstehenden Rand bzw. Randbereich ausgebildet. An einer Stirnseite dieses Randes ist der Auskoppelbereich 13a vorgesehen. Vorzugsweise trennt der Absatz 10a.2 den Einkoppelbereich vom Auskoppelbereich räumlich und optisch.

Der zumindest einen Teil des Auskoppelbereichs 13a bildende Flächenabschnitt der Seitenkontur 10a ist in einem Winkel β gegenüber der axialen Richtung bzw. gegenüber dem Einkoppelbereich 11a ausgerichtet. Der Winkel β liegt bevorzugt etwa im Bereich 30° bis 40°. Die Erfindung ist jedoch nicht auf diesen Winkelbereich beschränkt. Bei einem derartigen Winkel kann eine Brechung des seitlich abgestrahlten Lichts L1a in axialer Richtung, insbesondere nach oben (z.B. bei Pendelleuchten oder Deckenanbauleuchten in Richtung zur Wand/Decke), erzielt werden.

In der Figur 5 ist eine alternative Ausführungsform des Lichtleiters 10 gezeigt, bei welcher der Lichtleiter 10 einen zusätzlich auch in axialer Richtung hervorstehenden Rand(-bereich) aufweist. Der Auskoppelbereich 13a ist sowohl durch einen in radialer bzw. seitlicher Richtung hervorstehenden Rand als auch einen in axialer Richtung vorzugsweise zur Rückseite hin hervorstehenden Rand gebildet. Der hervorstehende Rand 14 weist einen Flächenabschnitt 14.1 auf, welcher an die Rückseite 10c des Lichtleiters angrenzt. Der hervorstehende Rand 14 ist vorzugsweise parallelogrammförmig, wobei eine äußere Stirnseite des Randes einen vergrößerten Auskoppelbereich bildet. Dank des hervorstehenden Rands 14 kann der Auskoppelbereich 13a somit mit einem vergrößerten Querschnitt ausgebildet werden, insbesondere mit einer in axialer Richtung vergrößerten Erstreckung.

Die neben dem Einkoppelbereich 11a angeordnete Lichtquelle 2a weist einen gewissen Öffnungskegel bzw. Austrittswinkel α auf, welcher z.B. etwa im Bereich von 40°bis 50°liegt. Der hervorstehende Rand 14 ist derart angeordnet, dass die direkt von der Lichtquelle 2a emittierte und in den Lichtleiter eingekoppelte Strahlung nicht auf den hervorstehenden Rand 14 trifft. Hierdurch kann vermieden werden, dass das von der Lichtquelle 2a emittierte Licht an der Fläche 14.1 dissipiert wird. Vielmehr wird das Licht zunächst in seitlicher Richtung auf die gegenüberliegende Seite des Lichtleiters 10 geleitet, dort teilweise am entfernten Auskoppelbereich 13b ausgekoppelt (siehe Figur 1) und vorzugsweise teilweise reflektiert, und im letztgenannten Fall dann in den Auskoppelbereich 13a geleitet, gegebenenfalls zusammen mit Licht weiterer, vorzugsweise entfernter Lichtquellen.

In der Figur 6 ist der in der Figur 5 gezeigte Lichtleiter 10 im Detail gezeigt. Der Winkel β, in welchem der Auskoppelbereich 13a in Bezug auf die axiale Richtung bzw. den Einkoppelbereich 11a angeordnet ist, liegt bei diesem Ausführungsbeispiel im Bereich von 40°bis 60°. Die Erfindung ist jedoch nicht auf diesen Winkelbereich beschränkt. Der Flächenabschnitt 14.1 ist vorzugsweise zumindest annähernd in demselben Winkel, also vorzugsweise parallel zum Auskoppelbereich, angeordnet. Hierdurch kann sichergestellt werden, dass seitlich durch den Lichtleiter 10 geleitetes Licht auf effiziente Weise in den hervorstehenden Rand 14 eingeleitet wird. Ferner ist gezeigt, dass dank des hervorstehenden Randes 14 die Erstreckung des Auskoppelbereichs 13a in axialer Richtung deutlich größer ist als wenn kein hervorstehender Rand 14 vorgesehen wäre. Dank des Randes 14 kann die Querschnittsfläche des Auskoppelbereichs 13a in axialer Richtung vervielfacht werden. Der hervorstehende Rand 14 in Verbindung mit dem Absatz 10a.2 kann sicherstellen, dass das durch den Lichtleiter 10 geleitete Licht an einer verhältnismäßig großen Fläche und weitgehend ungestört durch irgendwelche Lichtquellen oder Platinen in seitlicher Richtung ausgekoppelt werden kann. Dies ist insbesondere dann von Vorteil, wenn das am Auskoppelbereich 13a ausgekoppelte Licht für eine Indirektbeleuchtung verwendet werden soll.

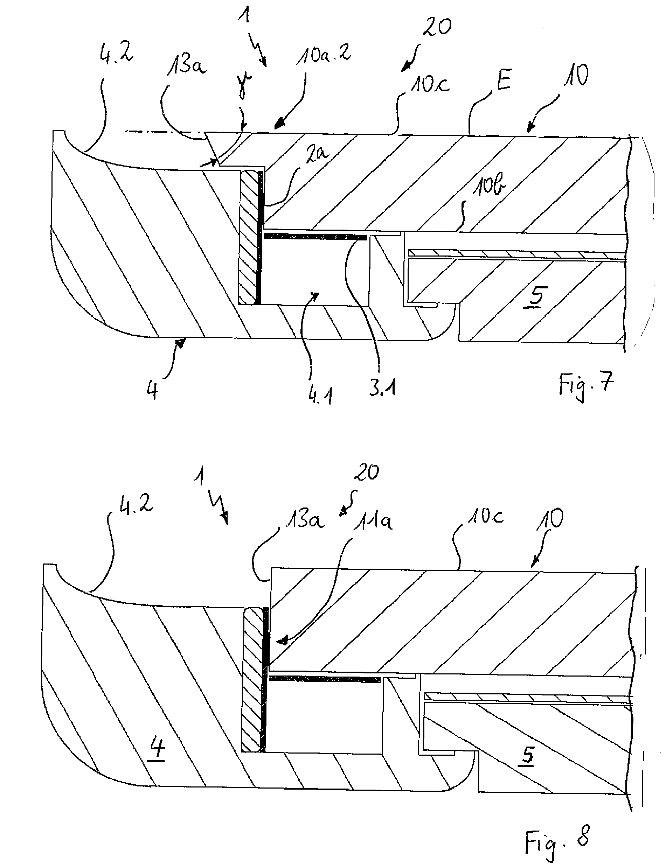

In der Figur 7 ist ein Ausführungsbeispiel einer Leuchte 1 gezeigt, bei welchem ein Gehäuse 4 ein Ableitelement 4.2 bildet, insbesondere eine Reflektorfläche, welche sich in seitlicher Richtung radial nach außen in Bezug auf den Auskoppelbereich 13a erstreckt. Das Ableitelement 4.2 ist bevorzugt in weißer Farbe oder in der Farbe des Gehäuses ausgeführt und kann pulverbeschichtet sein. Das Ableitelement 4.2 kann wahlweise auch als separates Teil mit dem Gehäuse verbunden sein. Das Ableitelement 4.2 kann als separates Teil z.B. aus Aluminium ausgeführt sein. Das Ableitelement 4.2 kann eine Silber-Hochglanzbeschichtung aufweisen. Das Ableitelement 4.2 weist vorzugsweise eine Wölbung auf, welche zur Rückseite 10c bzw. in Richtung der Rückseite ausgerichtet ist. Mit anderen Worten ist vorzugsweise das dem Auskoppelbereich abgewandte Ende des Ableitelements von der Vorderseite weg gebogen oder gewölbt. Hierdurch kann das am Auskoppelbereich 13a ausgekoppelte Licht noch effektiver nach oben bzw. in axialer Richtung ausgekoppelt werden. Zudem kann somit eine Abstrahlung nach unten und ein damit möglicherweise einhergehendes Blenden vermieden werden. Zwar kann bereits ein Winkel γ, insbesondere im Bereich von z. B. 50°bis 60°, sicherstellen, dass das ausgekoppelte Licht nach oben gebrochen wird. Die Reflektorfläche 4.2 kann das Licht jedoch noch effektiver umleiten. Der Winkel γ ist zwischen der Rückseite 10c und einem Flächenabschnitt des Auskoppelbereichs aufgetragen.

An der Vorderseite 10b kann wenigstens in einem äußeren Randbereich ein weiterer reflektierender Flächenabschnitt 3.1, insbesondere eine Reflektorfolie, angeordnet sein. Hierdurch kann von der Lichtquelle 2a emittiertes Licht im Lichtleiter 10 weitergeleitet werden, selbst für den Fall dass es an der Vorderseite 10b im Bereich des Flächenabschnitts 3.1 ausgekoppelt werden sollte, z.B. aufgrund eines großen Öffnungswinkels eines Abstrahlkegels der Lichtquelle 2a.

In der Figur 8 ist ein weiteres Ausführungsbeispiel gezeigt, bei welchem der Einkoppelbereich 11a und der Auskoppelbereich 13a zusammen an einer einzelnen Fläche der Seitenkontur gebildet sind. Es ist kein Absatz oder hervorstehender Rand vorgesehen. Die Seitenkontur wird durch eine einzelne, insbesondere senkrecht zur Rückseite 10c angeordnete Fläche gebildet. Bei diesem Ausführungsbeispiel kann das im Auskoppelbereich 13a ausgekoppelte Licht auf die Reflektorfläche 4.2 gelenkt werden, um von dort aus nach oben umgelenkt zu werden. Ein solcher Lichtleiter 10 ist besonders einfach aufgebaut und kostengünstig bereitzustellen.

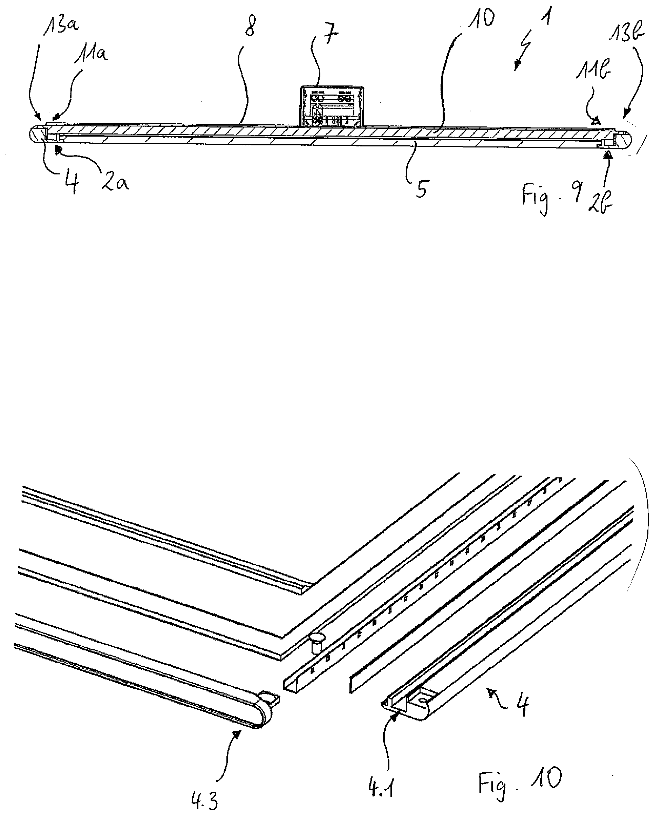

In der Figur 9 ist eine Leuchte 1 gezeigt, welche auch eine Treiberschaltung in einer Gerätebox 7 und vorzugsweise mindestens ein optisches Element, insbesondere eine Reflektorschicht 8 aufweist. Die Reflektorschicht 8 ist bevorzugt an einer Rückseite des Lichtleiters 10 angeordnet und kann sicherstellen, dass von den Lichtquellen 2a, 2b eingekoppeltes Licht nicht nach oben in Richtung der Gerätebox 7 bzw. zur Rückseite der Leuchte 1 hin ausgekoppelt wird, sondern nach unten in Richtung der Optikanordnung 5. Zusätzlich wird das Licht, wie zuvor beschrieben, auch an den beiden Auskoppelbereichen 13a, 13b seitlich ausgekoppelt. Die Reflektorschicht 8 kann durch eine auf die Rückseite des Lichtleiters 10 geklebte Folie gebildet sein, oder auch durch einzelne an der Rückseite angeordnete optische Elemente gebildet sein. In der Figur 9 ist die flächige Ausgestaltung des Lichtleiters 10 erkennbar. Der Lichtleiter 10 erstreckt sich im Wesentlichen in einer Erstreckungsebene, die in horizontaler Richtung ausgerichtet ist. Der Lichtleiter 10 ist mit einer einheitlichen bzw. konstanten Dicke in axialer Richtung ausgeführt. Die Breite bzw. Erstreckung in seitlicher Richtung beträgt ein Vielfaches der Dicke bzw. Erstreckung in axialer Richtung. Der Lichtleiter 10 ist flach und vorzugsweise plattenförmig ausgebildet.

In der Figur 10 sind einzelne Komponenten eines Gehäuses 4 der in der Figur 9 gezeigten Leuchte 1 gezeigt. Das Gehäuse 4 ist als Rahmenkonstruktion mit einzelnen Schienen oder Leisten ausgebildet, die als Steckverbindung formschlüssig zusammengesetzt werden können. Die Rahmenkonstruktion kann die Optikanordnung (nicht gezeigt) formschlüssig zusammenhalten. Ab einer bestimmten Größe des Gehäuses 4 kann dessen Biegesteifigkeit über eine rückseitige Halterung generiert werden, die z.B. als Verstrebung in die in der Fig. 9 gezeigte Gerätebox integriert ist. Hierdurch kann auch bei großen Abmessungen eine flache Bauform realisiert werden.

Die Rahmenkonstruktion ist für einen rechteckigen Lichtleiter vorgesehen. Die einzelnen Leisten sind dementsprechend linear bzw. linienförmig ausgebildet. Die den Lichtleiter aufnehmenden Gehäuseleisten können mit Stirnkappen 4.3 aneinander bzw. relativ zueinander fixiert werden. Wahlweise können auch Klammern oder Schrauben verwendet werden. Bei der gezeigten Rahmenkonstruktion kann ein stirnseitiger Formschluss durch die zuvor beschriebene Abstufung des Lichtleiters erzielt werden, wobei die Abstufung in die Stirnkappe 4.3 eingreift. Hierdurch kann eine Leuchte mit einem einheitlichen, konstanten Querschnitt bereitgestellt werden.

Die gezeigte Rahmenkonstruktion kann einen einfachen Aufbau der Leuchte sicherstellen, wobei auch die Montage auf einfache Weise erfolgen kann, insbesondere indem ein Lichtleiter zunächst auf die Gehäuseleisten gelegt wird, und daraufhin die Stirnkappe 4.3 seitlich an die Gehäuseleisten gesteckt wird und die gesamte Anordnung fixiert wird. Hierdurch kann eine kostengünstige und für mehrere Beleuchtungsfunktionen verwendbare Leuchte bereitgestellt werden. Der dabei verwendete Lichtleiter kann einfach aufgebaut sein.

Die vorliegende Erfindung ist nicht auf die zuvor beschriebenen Ausführungsformen beschränkt, solange sie vom Gegenstand der folgenden Ansprüche umfasst ist. Insbesondere sind die einzelnen Merkmale der Ausführungsbeispiele in beliebiger Weise mit- und untereinander kombinierbar.

So ist z.B. die Anzahl und Art der Leuchtquellen nicht durch die Erfindung beschränkt. Vorzugsweise sind Leuchtdioden als Lichtquelle bzw. Leuchtmittel vorgesehen. Es kann nur eine (dann vorzugsweise mit zusätzlichen reflektierenden Flächenabschnitten) oder mehrere Leuchtquellen vorgesehen sein, die vorzugsweise in spiegelsymmetrischer Weise und/oder über den Umfang der Leuchte bzw. der Seitenkontur (gleichmäßig) verteilt angeordnet sind. Ist die Leuchte 1 als längliches Element ausgebildet, so können die Lichtquellen vorzugsweise in gleichmäßigen Abständen wenigstens entlang der beiden gegenüberliegenden langen Stirnseiten der Leuchte angeordnet sein.

### Bezugszeichenliste

- 1: Leuchte
- 2a: (erste) Lichtquelle
- 2b: zweite Lichtquelle
- 3: reflektierender Flächenabschnitt, insbesondere Folie
- 3.1: (weiterer) reflektierender Flächenabschnitt, insbesondere Folie
- 4: Gehäuse
- 4.1: Bereich für Sensoren
- 4.2: Ableitelement, insbesondere Reflektor
- 4.3: Stirnkappe
- 5: Optikanordnung
- 6: Träger bzw. Aufnahme für Lichtquelle, insbesondere Platine
- 7: Gerätebox
- 8: optisches Element, insbesondere Reflektorschicht
- 10: Lichtleiter, insbesondere Lichtleiterplatte
- 10a: Seitenkontur
- 10a.1: Fläche bzw. Flächenabschnitt der Seitenkontur
- 10a.2: Abstufung bzw. Absatz der Seitenkontur
- 10b: Vorderseite
- 10c: Rückseite
- 11a: (erster) Einkoppelbereich
- 11b: zweiter (gegenüberliegender) Einkoppelbereich
- 12: Lichtaustrittsabschnitt
- 13a: (erster) Auskoppelbereich
- 13b: zweiter (gegenüberliegender) Auskoppelbereich
- 14: hervorstehender Rand, insbesondere vergrößerter Querschnitt
- 14.1: Flächenabschnitt
- 20: Leuchtenanordnung
- A: axiale Richtung
- E: Erstreckungsebene des Lichtleiters
- L1a: seitlich ausgekoppeltes Licht, insbesondere Indirektlicht
- L1b: seitlich ausgekoppeltes Licht, insbesondere Indirektlicht
- L2: an der Vorderseite ausgekoppeltes Licht, insbesondere Hauptbeleuchtung
- R: seitliche Richtung
- α: Austrittswinkel bzw. Öffnungswinkel des Leuchtmittels
- β: Winkel zwischen Auskoppelbereich und Einkoppelbereich
- γ: Winkel zwischen Auskoppelbereich und Erstreckungsebene

## Patentansprüche

1. Leuchtenanordnung (20) mit einem flächigen Lichtleiter (10) und mindestens einer Lichtquelle (2a, 2b), wobei der Lichtleiter (10) eine Vorderseite (10b) und eine Rückseite (10c) und eine die Vorder- und Rückseite (10b, 10c) verbindende Seitenkontur (10a) aufweist, und wobei die Lichtquelle (2a, 2b) in optischer Verbindung mit einem Einkoppelbereich (11a, 11b) des Lichtleiters zum Einkoppeln von Licht der Lichtquelle (2a, 2b) in den Lichtleiter (10) angeordnet ist,
**dadurch gekennzeichnet, dass** der Einkoppelbereich (11a, 11b) durch einen Teilbereich der Seitenkontur (10a) gebildet ist und der Lichtleiter (10) Auskoppelbereiche (13a, 13b) aufweist, welche durch mindestens zwei im Wesentlichen gegenüberliegende Teilbereiche der Seitenkontur (10a) gebildet sind, um das Licht der mindestens einen Lichtquelle (2a, 2b) über die Auskoppelbereiche (13a, 13b) seitlich auszukoppeln,
wobei mindestens einer der Auskoppelbereiche (13a, 13b) eine Fläche aufweist, die schräg in Bezug auf eine Erstreckungsebene (E) des Lichtleiters angeordnet ist, und wobei die Fläche des mindestens einen der Auskoppelbereiche (13a, 13b) in einem Winkel von 10° bis 80° in Bezug auf die Erstreckungsebene (E) des Lichtleiters angeordnet ist.

2. Leuchtenanordnung (20) nach Anspruch 1, **dadurch gekennzeichnet, dass** an der Seitenkontur (10a) im Wesentlichen gegenüberliegend zur Lichtquelle (2a, 2b) ein das Licht der Lichtquelle (2a, 2b) reflektierender Flächenabschnitt (3) vorgesehen ist.

3. Leuchtenanordnung (20) nach Anspruch 1 oder 2, **dadurch gekennzeichnet, dass** wenigstens einer der Auskoppelbereiche (13a, 13b) auf der Seite der Lichtquelle (2a, 2b) angeordnet ist.

4. Leuchtenanordnung (20) nach einem der vorhergehenden Ansprüche, **dadurch gekennzeichnet, dass** die Leuchtenanordnung (20) im Bereich des Einkoppelbereichs (11a, 11b) angrenzend an die Lichtquelle (2a, 2b) einen reflektierenden Flächenabschnitt (3) vorzugsweise in Form eines Reflektors, insbesondere einer reflektierenden Folie aufweist, und/oder dass die Lichtquelle (2a, 2b) auf einem Träger (6) angeordnet ist, welcher eine dem Einkoppelbereich zugewandte reflektierende Oberfläche aufweist.

5. Leuchtenanordnung (20) nach einem der vorhergehenden Ansprüche, **dadurch gekennzeichnet, dass** im Wesentlichen gegenüberliegend zur mindestens einen Lichtquelle (2a, 2b) mindestens eine weitere Lichtquelle (2a, 2b) in optischer Verbindung mit einem durch einen Teilberiech der Seitenkontur (10a) gebildeten weiteren Einkoppelbereich (11a, 11b) angeordnet ist.

6. Leuchtenanordnung (20) nach einem der vorhergehenden Ansprüche, **dadurch gekennzeichnet,**
**dass** die Auskoppelbereiche (13a, 13b) seitlich in Bezug auf den Einkoppelbereich (11a, 11b) hervorstehen, und/oder
**dass** die Seitenkontur (10a) eine Abstufung (10a.2) aufweist, welche eingerichtet ist, den Einkoppelbereich (11a, 11b) von den Auskoppelbereichen (13a, 13b) räumlich und optisch zu trennen, wobei mindestens einer der Auskoppelbereiche (13a, 13b) vorzugsweise als seitlich nach außen hervorstehender Rand ausgebildet ist.

7. Leuchtenanordnung (20) nach einem der vorhergehenden Ansprüche, **dadurch gekennzeichnet, dass** die Auskoppelbereiche (13a, 13b) näher an der Rückseite (10c) angeordnet sind als der Einkoppelbereich (11a, 11b).

8. Leuchtenanordnung (20) nach einem der vorhergehenden Ansprüche, **dadurch gekennzeichnet, dass** die Auskoppelbereiche (13a, 13b) entlang eines zumindest annähernd parallel zu der Erstreckungsebene (E) des Lichtleiters verlaufenden Längenabschnitts der Seitenkontur (10a) ausgebildet sind, insbesondere umlaufend.

9. Leuchtenanordnung (20) nach einem der vorhergehenden Ansprüche, **dadurch gekennzeichnet, dass** die Fläche des mindestens einen der Auskoppelbereiche (13a, 13b) in einem Winkel von 20° bis 70°, bevorzugt 35° bis 55°, besonders bevorzugt 40° bis 50°, insbesondere 45°, in Bezug auf die Erstreckungsebene (E) des Lichtleiters angeordnet ist.

10. Leuchtenanordnung (20) nach einem der vorhergehenden Ansprüche, **dadurch gekennzeichnet, dass** der Lichtleiter (10) in den Auskoppelbereichen (13a, 13b) einen in einer Richtung im Wesentlichen orthogonal zur seitlichen Richtung hervorstehenden Rand (14) aufweist,
wobei der hervorstehende Rand (14) vorzugsweise außerhalb von einem Abstrahlbereich der Lichtquelle (2a, 2b) angeordnet ist, und
wobei der hervorstehende Rand (14) vorzugsweise einen schräg in Bezug auf die Rückseite (10c) des Lichtleiters angeordneten Flächenabschnitt (14.1) aufweist, welcher an die Rückseite (10c) angrenzt, wobei der Flächenabschnitt (14.1) bevorzugt zumindest annähernd parallel zu einer Fläche der Auskoppelbereiche (13a, 13b) ausgerichtet ist.

11. Leuchtenanordnung (20) nach einem der vorhergehenden Ansprüche, **dadurch gekennzeichnet, dass** der Lichtleiter (10) plattenförmig mit zumindest annähernd parallel zueinander angeordneter Vorder- und Rückseite (10b, 10c) ausgebildet ist.

12. Leuchtenanordnung (20) nach einem der vorhergehenden Ansprüche, **dadurch gekennzeichnet,**
**dass** an der Vorderseite (10b) und/oder Rückseite (10c) des Lichtleiters mindestens ein optisches Element (8), insbesondere ein das Licht streuendes Element oder eine Reflektorschicht, angeordnet ist, welche(s) eingerichtet ist (sind), das Licht der Lichtquelle (2a, 2b) auf die Vorderseite (10b) zu richten, wobei die Vorderseite (10b) einen Lichtaustrittsabschnitt (12) zum Auskoppeln des Lichts aufweist, und/oder dass die Leuchtenanordnung (20) ein Ableitelement (4.2) aufweist, welches sich seitlich nach außen zumindest bis zu den Auskoppelbereichen (13a, 13b) erstreckt, wobei das Ableitelement (4.2) bevorzugt eine Blende ist, welche seitlich nach außen von den Auskoppelbereichen (13a, 13b) hervorsteht und zur Rückseite (10c) weist, insbesondere zur Rückseite (10c) hin konkav gewölbt ist, wobei das den Auskoppelbereichen (13a, 13b) abgewandte Ende des Ableitelements (4.2) vorzugsweise von der Vorderseite (10b) weg gewölbt ist, und wobei die Blende vorzugsweise ein das ausgekoppelte Licht streuendes optisches Element aufweist.

13. Leuchtenanordnung (20) nach Anspruch 1 mit mindestens zwei Lichtquellen (2a, 2b), wobei die Lichtquellen (2a, 2b) jeweils in optischer Verbindung mit dem Einkoppelbereich (11a, 11b) des Lichtleiters zum Einkoppeln von Licht der Lichtquelle (2a, 2b) in den Lichtleiter (10) angeordnet sind,
wobei die Einkoppelbereiche (11a, 11b) jeweils durch den Teilbereich der Seitenkontur (10a) gebildet sind, wobei die Auskoppelbereiche (13a, 13b) vorgesehen sind, um das Licht der Lichtquellen (2a, 2b) über die Auskoppelbereiche (13a, 13b) seitlich auszukoppeln, wobei die Leuchtenanordnung (20) im Bereich des Einkoppelbereichs (11a, 11b) angrenzend an die Lichtquellen (2a, 2b) jeweils eine reflektierende Oberfläche aufweist, wobei die Seitenkontur (10a) vorzugsweise eine Abstufung (10a.2) aufweist, welche eingerichtet ist, den Einkoppelbereich (11a, 11b) von den Auskoppelbereichen (13a, 13b) räumlich und optisch zu trennen, und wobei ein Lichtaustrittsabschnitt (12) an der Vorderseite (10b) vorgesehen ist, über die Licht der Lichtquellen (2a, 2b) im Wesentlichen orthogonal zur Erstreckungsebene (E) ausgekoppelt werden.

14. Leuchte (1), insbesondere Pendelleuchte, Einbauleuchte oder Anbauleuchte, mit einer Leuchtenanordnung (20) nach einem der vorhergehenden Ansprüche.

15. Leuchte (1) nach Anspruch 14, **dadurch gekennzeichnet,**
**dass** die Leuchte ein Gehäuse (4) aufweist, welches ein Ableitelement (4.2), insbesondere eine Blende mit einem das ausgekoppelte Licht streuenden optischen Element und/oder mit einem Reflektor, umfasst, welches derart in Bezug auf die Auskoppelbereiche (13a, 13b) angeordnet ist, dass aus den Auskoppelbereichen (13a, 13b) ausgekoppeltes Licht seitlich auf das Ableitelement (4.2) trifft, oder
**dass** die Leuchte ein Gehäuse (4) aufweist, wobei sich die Auskoppelbereiche (13a, 13b) des Lichtleiters (10) der Leuchtenanordnung (20) bis zu einem seitlichen Rand des Gehäuses (4) erstrecken oder das Gehäuse (4) seitlich überragen.

## Claims

1. A luminaire arrangement (20) comprising planar optical waveguide (10) and at least one light source (2a, 2b), wherein the optical waveguide (10) has a front side (10b) and a rear side (10c) and a side contour (10a) connecting the front and rear sides (10b, 10c), and wherein the light source (2a, 2b) is arranged in a manner optically connected to a coupling-in region (11a, 11b) of the optical waveguide for coupling light from the sight source (2a, 2b) into the optical waveguide (10), **characterized in that** the coupling-in region (11a, 11b) is formed by a partial region of the side contour (10a) and the optical waveguide (10) has coupling-out regions (13a, 13b), which are formed by at least two substantially opposite partial regions of the side contour (10a), in order to laterally couple out the light from the at least one light source (2a, 2b) via the coupling-out regions (13a, 13b),
wherein at least one of the coupling-out regions (13a, 13b) has a surface, which is arranged obliquely in respect to an extension plane (E) of the optical waveguide, and wherein the surface of the at least one of the coupling-out regions (13a, 13b) is arranged at an angle of 10° to 80° in respect to the extension plane (E) of the optical waveguide.

2. A luminaire arrangement (20) according to Claim 1, **characterized in that** a surface section (3) reflecting the light of the light source (2a, 2b) is provided on the side contour (10a) substantially opposite the light source (2a, 2b).

3. A luminaire arrangement (20) according to Claim 1 or 2, **characterized in that** at least one of the coupling-out regions (13a, 13b) is arranged on the side of the light source (2a, 2b).

4. A luminaire arrangement (20) according to any one of the preceding claims, **characterized in that** the luminaire arrangement (20) has a reflecting surface section (3) preferably in the form of a reflector, in particular, in the form of a reflecting film, in the region of the coupling-in region (11a, 11b) adjacent to the light source (2a, 2b), and/or that the light source (2a, 2b) is arranged on a carrier (6), which has a reflecting surface facing the coupling-in region.

5. A luminaire arrangement (20) according to any one of the preceding claims, **characterized in that** substantially opposite to the at least one light source (2a, 2b) at least one further light source (2a, 2b) is arranged in a manner optically connected to a further coupling-in region (11a, 11b) formed by a partial region of the side contour (10a).

6. A luminaire arrangement (20) according to any one of the preceding claims,
**characterized in**
**that** the coupling-out regions (13a, 13b) project laterally in respect to the coupling-in region (11a, 11b), and/or
**that** the side contour (10a) has a grading (10a.2), which is arranged to separate the coupling-in region (11a, 11b) from the coupling-out regions (13a, 13b) spatially and optically, wherein at least one of the coupling-out regions (13a, 13b) is designed preferably as an edge projecting laterally outwardly.

7. A luminaire arrangement (20) according to any one of the preceding claims, **characterized in that** the coupling-out regions (13a, 13b) are arranged closer to the rear side (10c) than the coupling-in region (11a, 11b).

8. A luminaire arrangement (20) according to any one of the preceding claims, **characterized in that** the coupling-out regions (13a, 13b) are formed along a longitudinal section of the side contour (10a) extending at least approximately parallel to the extension plane (E) of the optical waveguide, in particular, circumferentially.

9. A luminaire arrangement (20) according to any one of the preceding claims, **characterized in that** the surface of the at least one of the coupling-out regions (13a, 13b) is arranged at an angle of 20° to 70°, preferably 35° to 55°, particularly preferably 40° to 50°, in particular 45°, in respect to the extension plane (E) of the optical waveguide.

10. A luminaire arrangement (20) according to any one of the preceding claims, **characterized in that** the optical waveguide (10) in the coupling-out regions (13a, 13b) has an edge (14) projecting in a direction substantially orthogonal to the lateral direction,
wherein the projecting edge (14) is preferably arranged outside of an emission region of the light source (2a, 2b) and
wherein the projecting edge (14) preferably as a surface section (14.1) arranged obliquely in respect to the rear side (10c) of the optical waveguide, which surface section is adjacent to the rear side (10c), wherein the surface section (14.1) is preferably aligned at least approximately parallel to a surface of the coupling-out regions (13a, 13b).

11. A luminaire arrangement (20) according to any one of the preceding claims, **characterized in that** the optical waveguide (10) is designed plate-shaped with a front- and rear side (10b, 10c) arranged at least approximately parallel to one another.

12. A luminaire arrangement (20) according to any one of the preceding claims,
**characterized in**
**that** on the front side (10b) and/or rear side (10c) of the optical waveguide at least one optical element (8), in particular an element scattering the light or a reflector layer, is arranged, which is (are) arranged to direct the light of the light source (2a, 2b) to the front side (10b), wherein the front side (10b) has a light exit section (12) for the coupling-out of the light, and/or
**that** the luminaire arrangement (20) has a diverter element (4.2), which extends laterally outwardly at least up to the coupling-out regions (13a, 13b), wherein the diverter element (4.2) is preferably a diaphragm, which projects laterally outwardly from the coupling-out regions (13a, 13b) and points to the rear side (10c), in particular is concavely curved toward the rear side (10c), wherein the end of the diverter element (4.2) facing away from the coupling-out regions (13a, 13b) is preferably curved away from the front side (10b), and wherein the diaphragm preferably has an optical element scattering the coupled-out light.

13. A luminaire arrangement (20) according to Claim 1 having at least two light sources (2a, 2b), wherein the light sources (2a, 2b) in each case are arranged in an optically connected manner with the coupling-in region (11a, 11b) of the optical waveguide for coupling light of the light source (2a, 2b) into the optical waveguide (10),
wherein the coupling in regions (11a, 11b) in each case are formed by the partial region of the side contour (10a), wherein the coupling-out regions (13a, 13b) are provided, in order to couple-out the light of the light sources (2a, 2b) laterally via the coupling-out regions (13a, 13b), wherein the luminaire arrangement (20) has in each case a reflecting surface in the region of the coupling-in region (11a, 11b) adjacent to the light sources (2a, 2b), wherein the side contour (10a) preferably has a grading (10a.2), which is arranged to separate the coupling-in region (11a, 11b) from the coupling-out regions (13a, 13b) spatially and optically, and wherein a light exit section (12) is provided on the front side (10b), via which light of the light sources (2a, 2b) is coupled-out substantially orthogonal to the extension plane (E).

14. A luminaire (1), in particular, a pendant luminaire or surface-mounted luminaire, having a luminaire arrangement (20) according to any one of the preceding claims.

15. A luminaire (1) according to Claim 14, **characterized in**
**that** the luminaire has a housing (4), which comprises a diverter element (4.2), in particular, a diaphragm with an optical element scattering the coupled-out light and/or with a reflector, which is arranged in respect to the coupling-out regions (13a, 13b) in such a manner that light coupled-out from the coupling-out regions (13a, 13b) encounters the diverter element laterally, or
**that** the luminaire has a housing (4), wherein the coupling-out regions (13a, 13b) of the optical waveguide (10) of the luminaire arrangement (20) extend up to the lateral edge of the housing (4) or project above the housing (4) laterally.

## Revendications

1. Dispositif de luminaire (20) avec une fibre optique plate (10) et au moins une source de lumière (2a, 2b), la fibre optique (10) comprenant une face avant (10b) et une face arrière (10c) et un contour latéral (10a) reliant les faces avant et arrière (10b, 10c) et la source de lumière (2a, 2b) étant disposée en liaison optique avec une zone d'entrée (11a, 11b) de la fibre optique pour l'entrée de la lumière de la source de lumière (2a, 2b) dans la fibre optique (10),
**caractérisé en ce que** la zone d'entrée (11a, 11b) est constituée d'une zone partielle du contour latéral (10a) et la fibre optique (10) comprend des zones de sortie (13a, 13b) qui sont constituées d'au moins deux zones partielles globalement opposées du contour latéral (10a), afin de faire sortir la lumière de l'au moins une source de lumière (2a, 2b) latéralement par les zones de sortie (13a, 13b),
au moins une des zones de sortie (13a, 13b) comprenant une surface qui est disposée de manière oblique par rapport à un plan d'extension (E) de la fibre optique, et la surface de l'au moins une des zones de sortie (13a, 13b) est disposée avec un angle de 10° à 80° par rapport au plan d'extension (E) de la fibre optique.

2. Dispositif de luminaire (20) selon la revendication 1, **caractérisé en ce que**, sur le contour latéral (10a) globalement en face de la source de lumière (2a, 2b) est prévue une portion de surface (3) réfléchissant la lumière de la source de lumière (2a, 2b).

3. Dispositif de luminaire (20) selon la revendication 1 ou 2, **caractérisé en ce qu'**au moins une des zones de sortie (13a, 13b) est disposée sur le côté de la source de lumière (2a, 2b).

4. Dispositif de luminaire (20) selon l'une des revendications précédentes, **caractérisé en ce que** le dispositif de luminaire (20) comprend, au niveau de la zone d'entrée (11a, 11b), de manière adjacente à la source de lumière (2a, 2b), une portion de surface réfléchissante (3), de préférence sous la forme d'un réflecteur, plus particulièrement d'un film réfléchissant, et/ou **en ce que** la source de lumière (2a, 2b) est disposée sur un support (6), qui comprend une surface réfléchissante orientée vers la zone d'entrée.

5. Dispositif de luminaire (20) selon l'une des revendications précédentes, **caractérisé en ce que**, globalement en face de l'au moins une source de lumière (2a, 2b), est disposée au moins une autre source de lumière (2a, 2b) en liaison optique avec une autre zone d'entrée (11a, 11b) constituée d'une zone partielle du contour latéral (10a).

6. Dispositif de luminaire (20) selon l'une des revendications précédentes, **caractérisé en ce que**
les zones de sortie (13a, 13b) dépassent latéralement par rapport à la zone d'entrée (11a, 11b) et/ou
le contour latéral (10a) comprend un épaulement (10a.2) qui est conçu pour séparé physiquement et optiquement la zone d'entrée (11a, 11b) des zones de sortie (13a, 13b), au moins une des zones de sortie (13a, 13b) étant conçue de préférence comme un bord dépassant latéralement vers l'extérieur.

7. Dispositif de luminaire (20) selon l'une des revendications précédentes, **caractérisé en ce que** les zones de sortie (13a, 13b) sont disposées plus près de la face arrière (10c) que la zone d'entrée (11a, 11b).

8. Dispositif de luminaire (20) selon l'une des revendications précédentes, **caractérisé en ce que** les zones de sortie (13a, 13b) sont disposées le long d'une portion longitudinale du contour latéral (10a) s'étendant au moins approximativement parallèlement au plan d'extension (E) de la fibre optique, plus particulièrement de manière circulaire.

9. Dispositif de luminaire (20) selon l'une des revendications précédentes, **caractérisé en ce que** la surface de l'au moins une des zones de sortie (13a, 13b) est disposée avec un angle de 20° à 70°, de préférence de 35° à 55°, de préférence de 40° à 50°, plus particulièrement de 40° à 50°, plus particulièrement de 45°, par rapport au plan d'extension (E) de la fibre optique.

10. Dispositif de luminaire (20) selon l'une des revendications précédentes, **caractérisé en ce que** la fibre optique (10) comprend, dans les zones de sortie (13a, 13b), un bord (14) dépassant dans une direction globalement orthogonale à la direction latérale,
le bord dépassant (14) étant de préférence disposé à l'extérieur d'une zone d'émission de la source de lumière (2a, 2b) et
le bord dépassant (14) comprenant de préférence une portion de surface (14.1) disposée de manière oblique par rapport à la face arrière (10c) de la fibre optique, qui est adjacente à la face arrière (10c), la portion de surface (14.1) étant orientée de préférence au moins approximativement parallèlement à une surface des zones de sortie (13a, 13b).

11. Dispositif de luminaire (20) selon l'une des revendications précédentes, **caractérisé en ce que** la fibre optique (10) présente une forme de plaque avec au moins des faces avant et arrière (10b, 10c) disposées au moins approximativement parallèlement entre elles.

12. Dispositif de luminaire (20) selon l'une des revendications précédentes, **caractérisé en ce que**
sur la face avant (10b) et/ou la face arrière (10c) de la fibre optique est disposé au moins un élément optique (8), plus particulièrement un élément diffusant la lumière ou une couche réflectrice, qui est conçu pour orienter la lumière de la source de lumière (2a, 2b) vers la face avant (10b), la face avant (10b) comprenant une portion de sortie de lumière (12) pour la sortie de la lumière et/ou
le dispositif de luminaire (20) comprend un élément de déviation (4.2) qui s'étend latéralement vers l'extérieur au moins jusqu'aux zones de sortie (13a, 13b), l'élément de déviation (4.2) étant de préférence un diaphragme qui dépasse latéralement vers l'extérieur à partir des zones de sortie (13a, 13b) et qui est orienté vers la face arrière (10c), plus particulièrement est incurvé de manière concave en direction de la face arrière (10c), l'extrémité de l'élément de déviation (4.2) opposée aux zones de sortie (13a, 13b) étant de préférence incurvée à l'opposé de la face avant (10b) et le diaphragme comprenant de préférence un élément optique diffusant la lumière sortante.

13. Dispositif de luminaire (20) selon la revendication 1, avec au moins deux sources de lumière (2a, 2b), les sources de lumière (2a, 2b) étant disposées chacune en liaison optique avec la zone d'entrée (11a, 11b) de la fibre optique pour l'entrée de la lumière de la source de lumière (2a, 2b) dans la fibre optique (10),
les zones d'entrée (11a, 11b) étant constituée chacune de la zone partielle du contour latéral (10a), les zones de sortie (13a, 13b) étant prévues pour faire sortie la lumière des sources de lumière (2a, 2b) latéralement par les zones de sortie (13a, 13b), le dispositif de luminaire (20) comprenant, au niveau de la zone d'entrée (11a, 11b), de manière adjacente aux sources de lumière (2a, 2b), chacune une surface réfléchissante, le contour latéral (10a) comprenant de préférence un épaulement (10a.2) qui est conçu pour séparer physiquement et optiquement la zone d'entrée (11a, 11b) des zones de sortie (13a, 13b) et une portion de sortie de lumière (12) étant prévue sur la face avant (10b), grâce à laquelle la lumière des sources de lumière (2a, 2b) sort de manière globalement orthogonale au plan d'extension (E).

14. Luminaire (1), plus particulièrement luminaire pendulaire, luminaire encastré ou luminaire en applique, avec un dispositif de luminaire (20) selon l'une des revendications précédentes.

15. Luminaire (1) selon la revendication 14, **caractérisé en ce que**
le luminaire comprend un boîtier (4) qui comprend un élément de déviation (4.2), plus particulièrement un diaphragme avec un élément optique diffusant la lumière sortante et/ou avec un réflecteur, qui est disposé par rapport aux zones de sortie (13a, 13b) de façon à ce que la lumière sortant des zones de sortie (13a, 13b) arrive latéralement sur l'élément de déviation (4.2) ou
le luminaire comprend un boîtier (4), les zones de sortie (13a, 13b) de la fibre optique (10) du dispositif de luminaire (20) s'étendant jusqu'au à un bord latérale du boîtier (4) ou dépassent latéralement du boîtier (4).
